(19) **Europäisches Patentamt / European Patent Office / Office européen des brevets**

(11) **EP 4 517 855 A1**

(12) **EUROPEAN PATENT APPLICATION**
published in accordance with Art. 153(4) EPC

(43) Date of publication:
05.03.2025 Bulletin 2025/10

(21) Application number: 22950613.4

(22) Date of filing: 14.07.2022

(51) International Patent Classification (IPC):
$H01M\ 4/13^{(2010.01)}$     $H01M\ 10/052^{(2010.01)}$

(52) Cooperative Patent Classification (CPC):
H01M 4/13; H01M 10/052; Y02E 60/10

(86) International application number:
PCT/CN2022/105664

(87) International publication number:
WO 2024/011488 (18.01.2024 Gazette 2024/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: **Contemporary Amperex Technology (Hong Kong) Limited**
**Central, Central And Western District (HK)**

(72) Inventors:
• **YOU, Xingyan**
Ningde, Fujian 352100 (CN)

• **WU, Yiyang**
Ningde, Fujian 352100 (CN)
• **BAI, Wenlong**
Ningde, Fujian 352100 (CN)
• **WU, Baozhen**
Ningde, Fujian 352100 (CN)
• **WANG, Yuwen**
Ningde, Fujian 352100 (CN)

(74) Representative: **Gong, Jinping**
**CocreateIP**
**Neumarkterstr. 21**
**81673 München (DE)**

(54) **NEGATIVE ELECTRODE SHEET AND DEVICE COMPRISING NEGATIVE ELECTRODE SHEET**

(57) The present application provides a negative electrode plate and a device including the negative electrode plate. The negative electrode plate includes a negative electrode current collector; a negative electrode film layer on at least one surface of the negative electrode current collector; and a ferroelectric layer; the negative electrode film layer includes a negative electrode active material, and the ferroelectric layer is arranged on the surface of the negative electrode film layer opposite to the negative electrode current collector and includes ferroelectric particles. The negative electrode film layer has a compaction density denoted as P in g/cm$^3$, the negative electrode film layer has a coating weight denoted as CW in g/1540.25mm$^2$, the ferroelectric layer has a thickness denoted as H in $\mu$m, the ferroelectric particles have a volume-average particle size Dv50 denoted as D in $\mu$m, and the negative electrode plate satisfies the following formula: $0 < \dfrac{H*P}{D*CW*2*1000000} < 2$ . The negative electrode plate of the present application, when applied to a secondary battery, the fast-charging performance and cycle performance of the secondary battery can be improved.

Figure 1

EP 4 517 855 A1

**Description**

## TECHNICAL FIELD

The present application relates to the field of batteries, in particular to a negative electrode plate and a device including the negative electrode plate.

## BACKGROUNDS

Secondary battery has high capacity and long life, and thus is widely used in an electrical device, such as a mobile phone, a laptop, a battery car, an electric car, an electric plane, an electric ship, an electric toy car, an electric toy ship, an electric toy plane, and an electric tool. With the increasing applications of the battery, the requirements for the performance of the secondary battery become increasingly stringent.

Nevertheless, while improving the fast-charging capability of the secondary battery, the risks such as lithium deposition may be accompanied, which result in reduced cycle performance of the secondary battery.

## SUMMARY

The present application is made in view of the above problems, with the aim of providing a negative electrode plate and a device including the negative electrode plate.

In a first aspect, the present application provides a negative electrode plate for a secondary battery, including a negative electrode current collector, a negative electrode film layer which is arranged on at least one surface of the negative electrode current collector, and a ferroelectric layer; the negative electrode film layer includes a negative electrode active material, and the ferroelectric layer is arranged on the surface of the negative electrode film layer opposite to the negative electrode current collector and includes ferroelectric particles. The negative electrode film layer has a compaction density denoted as P in $g/cm^3$, the negative electrode film layer has a coating weight denoted as CW in $g/1540.25mm^2$, the ferroelectric layer has a thickness denoted as H in $\mu m$, the ferroelectric particles have a volume-average particle size Dv50 denoted as D in $\mu m$; the negative electrode plate satisfies $0 < \dfrac{H*P}{D*CW*2*1000000} < 2$, and optionally, $0 < \dfrac{H*P}{D*CW*2*1000000} < 1$.

Accordingly, in the present application, the compaction density P of the negative electrode film layer, the coating weight of the negative electrode film layer, the thickness H of the ferroelectric layer, and the volume-average particle size Dv50 of the ferroelectric particles are adjusted and controlled to satisfy the above ranges; by virtue of this, the negative electrode plate, when being applied in the secondary battery, can ensure the ferroelectric particles in the ferroelectric layer to exert the full ferroelectric effect and can ensure the uniform distribution of the metal ions at the interface between the negative electrode active material and the electrolyte during the charging of the secondary battery; as a result, the lithium-intercalation capability of the negative electrode plate is ensured and the cycle performance of the secondary battery in which the negative electrode plate is applied can be improved.

In some embodiments, the ferroelectric layer has the thickness denoted as H in $\mu m$, which satisfies $2 \le H \le 10$, and optionally, $4 \le H \le 6$.

Under the condition that the thickness H of the ferroelectric layer satisfies the above ranges, the ferroelectric layer can fully exert the ferroelectric effect and thus can further make uniform the distribution of metal ions during the charging of the secondary battery, so that the distribution of metal ions is more uniform. Moreover, the ferroelectric layer may not provide capacity for the secondary battery, so the ferroelectric layer having thickness falling within the above ranges will not occupy too large volume and thus will not excessively encroach on the interior space of the secondary battery; as a result, the space required for the negative electrode active material can be ensured, thereby ensuring the energy density and the capacity of the secondary battery. Accordingly, the secondary battery has the advantage of long life. In addition, under the condition that the ferroelectric layer has the appropriate thickness, the vertical growth of metal ions can effectively be inhibited, and thus the risk of short circuit inside the secondary battery can be effectively reduced when the secondary battery is charged at a high rate, thereby ensuring the high-rate charging performance of the secondary battery.

In some embodiments, the ferroelectric particles have the volume-average particle size Dv50 satisfying $0.08 \le D \le 1$, and optionally, $0.1 \le D \le 0.8$. Under the condition that the volume-average particle size of ferroelectric particles Dv50 satisfies the above ranges, the ferroelectric particles advantageously achieve uniform distribution in the ferroelectric layer.

In some embodiments, based on the total mass of the ferroelectric layer, the ferroelectric particles have the mass content denoted as a, which satisfies $90\% \le a \le 98\%$, and optionally, $95\% \le a \le 98\%$. Under the condition that the content of ferroelectric particles, a, satisfies the above ranges, the ferroelectric particles can achieve a more uniform distribution on the surface of the negative electrode film layer, thereby generating a more uniform reverse electric field.

In some embodiments, the ferroelectric particles include one or more selected from perovskite-structured oxides, tungsten-bronze-type compounds, and bismuthoxide-type layered compounds; the perovskite-structured oxides include one or more of barium titanate BTO, lead zirconate titanate PZT, lead metaniobate, lead barium lithium niobate PBLN, and lead titanate PT. The ferroelectric particles of the above types can effectively exert the ferroelectric effect, so as to improve the uniform distribution of the metal ions.

In some embodiments, the ferroelectric particles have a dielectric constant satisfying $100 < \varepsilon \leq 100000$, and optionally, $1000 \leq \varepsilon \leq 10000$. Under the condition that the dielectric constant of the ferroelectric particles falls with the above ranges, the metal ions can achieve rapid migration, so that migration rate of metal ions ensured.

In some embodiments, the negative electrode film layer has a compaction density under a force of 20000N denoted as P in $g/cm^3$ and a coating weight denoted as CW in $g/1540.25mm^2$, which satisfy

$$3 < \frac{P}{CW*1000} < 30$$

.

**Under** the condition that the compaction density P and the coating weight CW of the negative electrode film layer satisfy the above ranges, the negative electrode film layer can be ensured to fall within an appropriate thickness range, thereby ensuring the energy density of the secondary battery. Under the condition that Z falls within the above ranges during the charging of the secondary battery, the ferroelectric layer may affect the overall structure of the plate, including the underlying layer structure of the plate; moreover, the plate has appropriate pores, and accordingly, the electrolytic solution is allowed to fully infiltrate the plate, which is conducive to the migration of the lithium ions.

In some embodiments, the negative electrode film layer has the compaction density denoted as P in $g/cm^3$, which satisfies $1.10 \leq P \leq 1.85$, and optionally, $1.30 \leq P \leq 1.80$. By adjusting the compaction density of the negative electrode film layer to fall within in the appropriate range, the secondary battery may have a high energy density. In addition, by adjusting the compaction density to fall within the appropriate range, the negative electrode film layer may further have great ability to maintain the pore structure during the cycle process; accordingly, the electrolytic solution may better infiltrate the negative electrode plate, and thus the cycle performance of the secondary battery can be further improved.

In some embodiments, the negative electrode film layer has the coating weight denoted as CW in $g/1540.25mm^2$, which satisfies $0.10 \leq CW \leq 0.30$, and optionally, $0.14 \leq CW \leq 0.20$. By adjusting the coating weight of the negative electrode film layer CW to fall within the appropriate range, the energy density of the cell and the effect of the ferroelectric layer on the negative electrode film can be ensured.

In some embodiments, the negative electrode film layer has a thickness denoted as L in $\mu m$, which satisfies $30\mu m \leq L \leq 200\mu m$, and optionally, $35\mu m \leq L \leq 190\mu m$. By adjusting the thickness L of the negative electrode film layer to fall within the appropriate range, on the one hand, the quality of the negative electrode active material can be ensured, so as to ensure the energy density of the secondary battery; on the other hand, in combination with the ferroelectric layer, the ferroelectric layer can achieve full ferroelectric effect and thus facilitate the uniform distribution of metal ions in the negative electrode film layer.

In some embodiments, the negative electrode active material includes one or more of natural graphite, artificial graphite, soft carbon, hard carbon, silicon-based material, tin-based material, and lithium titanate.

In a second aspect, the present application provides a secondary battery, including the negative electrode plate according to any embodiment of the first aspect of the present application.

In a third aspect, the present application provides a battery module, including the secondary battery according to the embodiment of the second aspect of the present application.

In a fourth aspect, the present application provides a battery pack, including the battery module according to the embodiment of the third aspect of the present application.

In a fifth aspect, the present application provides an electrical device, including the secondary battery according to the embodiment of the second aspect of the present application, battery module according to the embodiment of the third aspect of the present application, or the battery pack according to the embodiment of the fifth aspect of the present application.

## Brief Description of the Drawings

In order to provide a clearer explanation of the technical solution of the embodiments of the present application, a brief introduction will be given to the accompanying drawings required in the embodiments of the present application. It is evident that the accompanying drawings described below are only some embodiments of the present application. For ordinary technical personnel in the art, other accompanying drawings can be obtained based on the drawings without any creative effort.

Figure 1 is a schematic diagram of the negative electrode according to one embodiment of the present application.

Figure 2 is a sectional schematic diagram along the A-A line of the negative pole plate as shown in Figure 1.

Figure 3 is a schematic diagram of the battery assembly according to one embodiment of the present application.

Figure 4 is a schematic diagram of the secondary battery according to one embodiment of the present application.

Figure 5 is an exploded schematic diagram of the battery pack according to one embodiment of the present application embodiment as shown in Figure 4.

Figure 6 is a schematic diagram of the battery module according to one embodiment of the application.

Figure 7 is a schematic diagram of the battery pack according to one embodiment of the present application.

Figure 8 an exploded schematic diagram of the battery pack according to one embodiment of the present application as shown in Figure 7.

Figure 9 is a schematic diagram of the electrical device according to one embodiment of the present application.

The accompanied drawings may not necessarily be drawn to the actual scale.

The references in the accompanied drawings is described as follows:

1. Battery pack; 2. Upper box; 3. Lower box; 4. Battery module;

5. Secondary battery; 51. Housing; 52. Electrode assembly; 521. Negative electrode plate, 522. Positive electrode plate, 523.Seperator;

5211. Negative electrode current collector; 5212. Negative electrode film layer; 5213. Ferroelectric layer;

53. Cover plate; and

6. Electrical device.

## Detailed Description

Hereinbelow, the implementation of the negative electrode plate and the device including the negative electrode plate as disclosed in the present application will be explained in detail. However, there may be situations where unnecessary detailed explanations may be omitted. For example, there are situations where detailed explanations of well-known matters are omitted and repeated explanations of the same structure are actually provided. This is to avoid the following explanations becoming unnecessarily lengthy and easy for those skilled in the art to understand. In addition, the accompanying drawings and the following explanations are provided for those skilled in the art to fully understand the present application and are not intended to limit the subject matter recorded in the claims.

The "scope" disclosed in the present application is limited in the form of a lower limit and an upper limit. The given scope is limited by selecting a lower limit and an upper limit, and the selected lower limit and upper limit the boundary of the special scope. The range limited in this way can include or exclude end values, and can be arbitrarily combined, that is, any lower limit can be combined with any upper limit to form a range. For example, if a range of 60-120 and 80-110 is listed for specific parameters, it is also expected to be understood as a range of 60-110 and 80-120. In addition, if the minimum range values 1 and 2 are listed, and if the maximum range values 3, 4, and 5 are listed, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed in this article, and "0-5" is only a shortened representation of these numerical combinations. In addition, when expressing an integer with a parameter of $\geq 2$, it is equivalent to disclosing that the parameter is, for example, integers 2, 3, 4, 5, 6, 7, 8, 9, 10, 11, 12, etc.

Unless otherwise specified, all implementations and optional implementations of the present application can be combined to form new technical solutions. Unless otherwise specified, all technical features and optional technical features of the present application can be combined to form a new technical solution.

Unless otherwise specified, all steps of the present application can be carried out in sequence or randomly, preferably in sequence. For example, the method includes steps (a) and (b), indicating that the method can include steps (a) and (b) that are sequentially performed, as well as steps (b) and (a) that are sequentially performed. For example, mentioning a method can also include step (c), indicating that step (c) can be added to the method in any order. For example, the method can include steps (a), (b), and (c), as well as steps (a), (c), and (b), and can also include steps (c), (a), and (b).

Unless otherwise specified, the terms "comprise/comprising", "include/including", or "contain/containing" mentioned in the present application indicate the open-ended mode, but also can be interpret as the closed-ended mode. For example, "comprise/comprising", "include/including", or "contain/containing" may indicate that other components that are not listed may be comprised, included, or contained, or only listed components may be comprised, included, or contained.

Unless otherwise specified, in the present application, the wording "or" is inclusive. For example, the phrase "A or B" means "A, B, or both A and B". More specifically, any of the following conditions satisfy the condition "A or B": A is true (or exists) and B is false (or does not exist); A is false (or non-existent) and B is true (or exists); or both A and B are true (or present).

In the present application, the terms "a plurality of" and "multiple" refer to two or more than two.

In the present application, the secondary battery may include a lithium-ion battery, a lithium-sulfur battery, a sodium-lithium-ion battery, a sodium-ion battery, a magnesium-ion battery etc. nevertheless, the embodiments of the present application are not limited thereto.

The secondary battery includes an electrode assembly including a positive electrode plate, a negative electrode plate and a separator, and an electrolytic solution. The secondary battery mainly relies on the movement of the metal ions between the positive electrode plate and the negative electrode plate to work, in which the positive electrode plate includes a positive electrode active material and the negative electrode plate includes a negative electrode active material. Herein, the metal ions may be lithium ions, sodium ions, etc. Hereinbelow, charging process will be explained taking lithium ions for example.

During the charging of the secondary battery, the electrode dynamics process usually includes the following steps:

(1) step of deintercalating lithium ions, in which the lithium ions deintercalate out of the positive electrode active material and migrate into the electrolyte phase; (2) step of liquid-phase mass transferring in the electrolyte phase, in which the solvated lithium ions in the electrolytic solution diffuse and move to the surface of the negative electrode active material; (3) step of surface-converting, in which during the initial charging, the solvated lithium ions are adsorbed on the surface of the negative electrode active material and react to form a solid electrolyte interface (SEI) film, and during the subsequent charging, the solvated lithium ions are adsorbed on the surface of the SEI film and desolvated, and then reach the surface of the negative electrode active material; (4) step of charge exchanging, in which the lithium ions gain electrons from the surface of the negative electrode active material and form lithium-intercalation products; and (5) step of solid-phase mass transferring of the lithium-intercalation product, in which the lithium-intercalation products solid-phase diffuse from surface of the negative electrode active material surface to the interior to complete the charging process.

With the increase of charging rate, lithium ions deintercalate out of the positive electrode active material too fast, thus, the current density and concentration distribution of the lithium ions in the electrolyte phase may be not uniform, which is likely for the lithium ions in the electrolyte phase to accumulate on the local surface of the negative electrode active material; as a result, the lithium ions that deintercalate out of the positive electrode active material cannot all intercalate into the negative electrode active material, the lithium ions that cannot intercalate into the negative electrode active material intercalate into the negative electrode active material gain electrons on the surface of the negative electrode active material to form a silver-white elemental lithium metal, that is, the "lithium dendrites". The lithium dendrites may reduce the performance of the secondary battery, such as shortening the cycle life, and even form a sharp shape which may pierce the separator and thus lead to the short circuit in the secondary battery, which may cause combustion, explosion and other catastrophic consequences. Moreover, the elemental lithium metal as constantly deposited may fall off from the surface of the negative electrode active material, resulting in the formation of "inactive lithium", which cannot react; as a result, the energy density of the secondary battery is reduced.

In view of the above, the inventors make improvement on the negative electrode plate and proposed a negative electrode plate including a ferroelectric layer, which can make the metal ions such as lithium ions uniformly intercalate into the negative electrode active material, and thus improve the "lithium dendrites" and "inactive lithium"; accordingly, the cycle performance of the secondary battery including the negative electrode plate are improved and the fast-charging performance of the negative electrode plate are improved.

**Negative Electrode Plate**

In the first aspect, the present application provides a negative electrode plate.

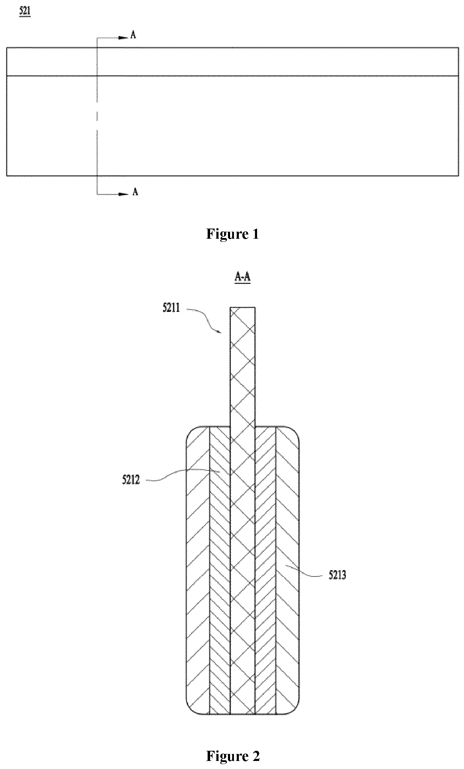

As shown in Figures 1 and 2, the negative electrode plate 521 includes a negative electrode current collector 5211, a negative electrode film layer 5212 which is arranged on at least one surface of the negative electrode current collector 5211, and a ferroelectric layer 5213; the negative electrode film layer 5212 includes a negative electrode active material, and the ferroelectric layer 5213 is arranged on the surface of the negative electrode film layer 5212 opposite to the negative electrode current collector 5211 and includes ferroelectric particles. The negative electrode film layer 5212 has a compaction density denoted as P in $g/cm^3$, the negative electrode film layer 5212 has a coating weight denoted as CW in $g/1540.25mm^2$, the ferroelectric layer 5213 has a thickness denoted as H in $\mu m$, the ferroelectric particles have a volume-average particle size Dv50 denoted as D in $\mu m$, and the secondary battery satisfies

$$0 < \frac{H*P}{D*CW*2*1000000} < 2 \text{ , and optionally, } 0 < \frac{H*P}{D*CW*2*1000000} < 1 .$$

For illustrative purposes,

$$S = \frac{H*P}{D*CW*2*1000000} .$$

The negative electrode current collector 5211 includes two surfaces opposite to each other in the thickness direction thereof, the negative film layer 5212 may be arranged on one of or both of the two opposite surfaces of the negative electrode current collector 5211. The negative electrode current collector 5211 may be a copper foil or a composite collector, which is not limited in the present application.

The ferroelectric layer 5213 includes ferroelectric particles, and may further include auxiliaries such as a binder. Under the condition that the ferroelectric layer 5213 includes ferroelectric particles, the ferroelectric particles may be directly disposed on the surface of the negative electrode film layer 5212. Under the condition that the ferroelectric layer 5213 further includes auxiliaries, the ferroelectric particles may be disposed on the surface of the negative electrode film layer 5212 via a binder, etc.

Although the mechanism is not clear yet, the inventors have found that the negative electrode plate 521 has good dynamic performances and thus can effectively alleviate the phenomenon of metal deposition and can further improve the fast-charging performance of the secondary battery.

The inventors speculate that the mechanism is as follows: under an external electric field, the direction and intensity of the spontaneous polarization direction of the ferroelectric material, as well as the cell parameters thereof will change, so that the ferroelectric particles have a ferroelectric effect. In other words, the ferroelectric effect means that the ferroelectric particles may generate electric charges on the surface thereof under an external electric field. In the present application, during the charging of the secondary battery, there is an internal electric field between the positive electrode plate and the negative electrode plate 521, and under the internal electric field, the ferroelectric particles are excited to produce a ferroelectric effect, in which the centers of the positive and negative charges inside the ferroelectric particles are displaced, resulting in a reverse electric field opposite to the internal electric field; the reverse electric field may make uniform the electron density on the surface of the negative electrode active material, thus making uniform the distribution of the metal ions at the interface between the negative electrode active material and the electrolyte, that is, making uniform the concentration distribution of the metal ions at the interface between the negative electrode active material and the electrolyte; as a result, the metal ions may uniformly intercalate into the negative electrode active material, thereby reducing the risk of metal deposition caused by the local accumulation of the metal ions and reducing the loss of the metal ions. Accordingly, the cycle performance of the secondary battery can be ensured. In the present application, the risk of local deposition of the metal ions can be reduced. Taking lithium ions as the metal ions for example, when the risk of lithium ion deposition is reduced, the risk of lithium dendrites can be reduced, and the risk of the internal short circuit in the secondary battery result from the fact that the lithium dendrites pierce the separator can be reduced; as a result, the safety performance of the secondary battery can be improved. In addition, the energy barrier for the metal ions to migrate into the negative electrode active material via the ferroelectric particles is relatively low, and thus the migration speed is relatively fast; accordingly, the fast-charging performance of the negative electrode plate 521 can be ensured.

In addition, ferroelectric particles can alleviate the volume expansion of the negative electrode plate 5212, protect the structure of the negative electrode plate 5212, and ensure the cycle stability of the negative diaphragm 5212, thereby ensuring the cycle stability of the secondary battery.

In the present application, the compaction density P of the negative electrode film layer 5212, the coating weight of the negative electrode film layer 5212, the thickness H of the ferroelectric layer 5213, and the volume-average particle size Dv50 of the ferroelectric particles are adjusted and controlled to satisfy the above ranges; by virtue of this, the negative electrode plate 521, when being applied in the secondary battery, can ensure the ferroelectric particles in the ferroelectric layer to exert the full ferroelectric effect and can ensure the uniform distribution of the metal ions at the interface between the negative electrode active material and the electrolyte during the charging of the secondary battery; as a result, the lithium-intercalation capability of the negative electrode plate is ensured and the cycle performance of the secondary battery in which the negative electrode plate is applied can be improved.

In some embodiments, the thickness H of ferroelectric layer 5213, in $\mu$m, satisfies $2 \leq H \leq 10$.

Under the condition that the thickness H of the ferroelectric layer 5213 satisfies the above range, the ferroelectric layer 5213 can fully exert the ferroelectric effect and thus can further make uniform the distribution of metal ions during the charging of the secondary battery, so that the distribution of metal ions is uniform. Moreover, the ferroelectric layer 5213 may not provide capacity for the secondary battery, so the ferroelectric layer 5213 having thickness falling within the above ranges will not occupy too large volume and thus will not excessively encroach on the interior space of the secondary battery; as a result, the space required for the negative electrode active material can be ensured, thereby ensuring the energy density and the capacity of the secondary battery. Accordingly, the secondary battery has the advantage of long life. In addition, under the condition that the ferroelectric layer 5213 has the appropriate thickness, the vertical growth of metal ions can effectively be inhibited, and thus the risk of short circuit inside the secondary battery can be effectively reduced when the secondary battery is charged at a high rate, thereby ensuring the high-rate charging performance of the secondary battery. Optionally, the thickness of ferroelectric layer 5213 satisfies $4 \leq H \leq 6$. For example, the thickness of ferroelectric layer 5213 may be 2$\mu$m, 3$\mu$m, 4$\mu$m, 5$\mu$m, 6$\mu$m, 7$\mu$m, 8$\mu$m, 9$\mu$m, 10$\mu$m, or in the range formed by any two of the values as mentioned above.

The thickness H of ferroelectric layer 5213 has a meaning as commonly understood in the art and can be tested using equipment or methods well-known in the art. For example, the thickness of negative electrode plate 521 may be measured at at least 12 different positions with a micrometer having 0.1$\mu$m resolution along the thickness direction of negative electrode plate 521 (excluding the ferroelectric layer 5213), and the average is the thickness of the negative electrode plate 521 denoted as h1; then, the thickness of negative electrode plate 521 is measured at at least 12 different positions with a micrometer having 0.1$\mu$m resolution along the thickness direction of negative electrode plate 521 (including the ferroelectric layer 5213), and the average is the thickness of negative electrode plate 521 denoted as h2; the thickness of the ferroelectric layer 5213 H = h2 - h1.

The thickness of ferroelectric layer 5213 can be directly tested by tomography, in particular, it is tested as follows: 1. Sample preparation, a. the plate is cut into a size of 6mm*6mm with a ceramic scissors and is adhered to a sample table coated with the paraffin, the sample slightly protrude (< 1mm) the edge of the sample table, and b. the polishing voltage and time (thickness 150um, negative electrode plate, 7.5KV, 100min) are set; and 2. Morphology analysis, the sample is observed with a scanning electron microscope at 50 times magnification, the sample is moved until it can be observed clearly, the thickness of 5213 is marked at twelve locations, afterwards, the average is the thickness of 5213.

In some embodiments, the volume average particle size Dv50 of the ferroelectric particles is denoted as D in $\mu$m, $0.08 \leq D \leq 1$.

Under the condition that the volume average particle size Dv50 of ferroelectric particles satisfies the above range, it is conductive to a uniform distribution of the ferroelectric particles in ferroelectric layer 5213. During the charging of the secondary battery, the ferroelectric particles each are excited to produce the ferroelectric effect, which generates the reverse electric field. The appropriate particle size makes the reverse electric fields between the ferroelectric particles not interfere with each other, so as to ensure the electric field strength of each ferroelectric particle and further ensure that the ferroelectric particles can uniform the metal ions. In addition, the ferroelectric particles having the above volume average particle size are easy to be prepared and formed, and the preparation process is simple. When the particle size is too small, the preparation process is complicated and costly. Optionally, $0.1 \leq D \leq 0.8\mu$m. For example, D in $\mu$m may be 0.08$\mu$m, 0.09$\mu$m, 0.10$\mu$m, 0.15$\mu$m, 0.20$\mu$m, 0.25$\mu$m, 0.30$\mu$m, 0.35$\mu$m, 0.40$\mu$m, 0.50$\mu$m, 0.60$\mu$m, 0.70$\mu$m, 0.80$\mu$m, 0.90$\mu$m, or in the range formed by any two of the values as mentioned above.

In the present application, the volume average particle size Dv50 of the material has a meaning as commonly understood in the art. It corresponds to the particle size when the cumulative volume distribution percentage of the material reaches 50%, which may be tested by instruments and methods well-known in the art. For example, it can be conveniently tested according to GB/T 19077-2016 Particle size analysis -Laser diffraction methods using a laser particle size analyzer, such as Mastersizer 2000E Laser Particle Size Analyzer from Malvern Instruments Co., LTD, England.

In some embodiments, based on the total mass of the ferroelectric layer 5213, the mass content a of the ferroelectric particle satisfies $90\% \leq a \leq 98\%$, and optionally, $95\% \leq a \leq 98\%$.

Under the condition that the mass content a of ferroelectric particles satisfies the above ranges, the ferroelectric particles may distribute on the surface of the negative electrode film layer 5212 more evenly, and thus generate more uniform reverse electric fields. Moreover, the ferroelectric layer 5213 containing the ferroelectric particles may not bond well with the negative electrode plate, the ferroelectric layer is stable.

The ferroelectric layer 5213 may be prepared by applying a ferroelectric slurry containing the ferroelectric particles on the surface of the negative electrode film layer 5212, and solidifying the slurry so as to form the ferroelectric layer 5213. Accordingly, by adjusting the solid content of ferroelectric particles in the ferroelectric slurry, the mass content a of ferroelectric particles in the ferroelectric layer 5213 may be adjusted.

In some embodiments, the ferroelectric particles may include one or more selected from perovskite-structured oxides, tungsten-bronze-type compounds, and bismuthoxide-type layered compounds. Optionally, the ferroelectric particles 103 are selected from perovskite-structured oxides.

Optionally, the perovskite-structured oxides have the molecular formula $Ba_{1-x}A_xTi_{1-y}B_yO_3$, in which A includes one or more selected from Pb, Sr, Ca, K, Na and Cd, B includes one or more selected from Sn, Hf, Zr, Ce, Nb, and Th, $0 \leq x \leq 1$, and $0 \leq y \leq 1$. For example, the perovskite-structured oxides may be one or more selected from $BaTiO_3$, $Ba_{1-x1}Sr_{x1}TiO_3$ ($0 \leq x1 \leq 1$), $SrTiO_3$, $PbTiO_3$, $PbZr_{y1}Ti_{1-y1}O_3$ ($0 \leq y1 \leq 1$), $BaZr_{y2}Ti_{1-y2}O_3$ ($0 < y2 < 1$), $KnbO_3$, $NaNbO_3$. Further, the ferroelectric particles include one or more of barium titanate BTO, lead zirconate titanate PZT, lead metaniobate, lead barium lithium niobate PBLN, and lead titanate PT. The above ferroelectric particles can effectively exert the ferroelectric effect, thereby improving the uniform distribution of the metal ions.

Optionally, the tungsten-bronze-type compounds may have the molecular formula $M_zWO_3$, in which M includes one or more selected from Na, K, Rb, and Cs, and $0 < z < 1$. For example, the tungsten-bronze-type compounds may include one or more selected from $Na_{z1}WO_3$ ($0 < z1 < 1$), $K_{z2}WO_3$ ($0 < z2 < 1$).

Optionally, the bismuthoxide-type layered compounds have the molecular formula $(Bi_2O_2)(C_{n-1}D_nO_{3n+1})$, in which C includes one or more selected from Na, K, Ba, Sr, Pb, Ca, Ln and Bi, D includes one or more selected from Zr, Cr, Nb, Ta, Mo, W, Fe, Ti and V, and $2 \leq n \leq 5$. For example, the bismuthoxide-type layered compounds may be one or more of $SrBi_2Nb_2O_9$, $SrBi_2Ta_2O_9$, $SrBi_aNb_2O_9$, and $Bi_4Ti_3O_{12}$.

In some embodiments, the ferroelectric particles have the dielectric constant satisfying $100 \leq \varepsilon \leq 100000$.

Under the condition that the dielectric constant of the ferroelectric particles falls within the above range, the ferroelectric particles can make the metal ions migrate rapidly, thereby ensuring the migration rate of metal ions. Optionally, $1000 \leq \varepsilon \leq 10000$. For example, the dielectric constant of the ferroelectric particles may be from 100 to 50000, from 100 to 25000, from 100 to 10000, from 100 to 5000, from 100 to 4000, from 100 to 3000, from 100 to 2000, from 100 to 1000, from 100 to 500, from 150 to 50000, from 150 to 25000, from 150 to 10000, from 150 to 5000, from 150 to 4000, from 150 to 3000, from 150 to 2000, from 150 to 1000, from 150 to 500, from 200 to 50000, from 200 to 25000, from 200 to 10000, from 200 to 5000, from 200 to 4000, from 200 to 3000, from 200 to 2000, or from 200 to 1000.

In the present application, the dielectric constant of the ferroelectric particles refers to a dielectric constant at room temperature ($25°C \pm 5°C$), which has a meaning as commonly understood in the art and can be tested using equipment or methods well-known in the art. For example, the ferroelectric particles may be prepared into a circular sample, the capacity C of which can be measured with an LCR tester, and the dielectric constant can be obtained according to a formula, dielectric constant $\varepsilon = (C \times d)/(\varepsilon_0 \times A)$, in which C represents the capacity, in farads (F); d represents the thickness of the sample, in cm; A represents the area of the sample, in $cm^2$; and $\varepsilon_0$ represents a vacuum dielectric constant, $\varepsilon_0 = 8.854 \times 10^{-14}$ F/cm. In the present application, the test conditions may be 1 KHz, 1.0 V, and $25°C \pm 5°C$. The test may be performed according to the standard GB/T 11297.11-2015. When the sample is prepared, reference may be made to Chinese patent application CN114217139A.

In some embodiments, the ferroelectric layer 5213 includes a binder. The binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene terpolymer, tetrafluoroethylene-hexafluoropropylene copolymer, and fluorine-containing acrylic resin.

In some embodiments, the ferroelectric layer 5213 further includes a dispersant. The dispersant may include one or more of sodium carboxymethylcellulose, polyethylpyrrolidone, and Hypermer KD-1.

In some embodiments, the ferroelectric layer 5213 further includes other functional additives, such as a conductive agent, in order to increase the migration rate of the metal ions in the ferroelectric layer 5213, thereby ensuring the rapid charging capability of the secondary battery. For example, the conductive agent may include one or more of superconducting carbon, acetylene black, carbon black, Ketjen Black, carbon dot, carbon nanotube, graphene, and carbon nanofiber.

In some embodiments, the compaction density of the negative electrode film layer 5212 and the coating weight CW in $g/1540.25mm^2$ of the negative electrode film layer 5212 satisfy

$$3 < \frac{P}{CW*1000} < 30$$

.

Let

$$Z = \frac{P}{CW*1000}$$

.

Under the condition that the compaction density P and the coating weight CW of the negative electrode film layer satisfy the above ranges, the negative electrode film layer can be ensured to fall within appropriate thickness ranges, thereby ensuring the energy density of the secondary battery. Under the condition that Z falls within the above range during the charging of the secondary battery, the ferroelectric layer may affect the overall structure of the plate, including the underlying layer structure of the plate; moreover, the plate has appropriate pores, and accordingly, the electrolytic solution is allowed to fully infiltrate the plate, which is conducive to the migration of the lithium ions. Optionally, Z may be from 5 to 27. For example, it may be 5, 10, 15, 20, 25, or 27, or in the range formed by any two of the values as mentioned above.

In some embodiments, the compaction density of the negative electrode film layer 5212 g/cm$^3$ satisfies $1.10 \leq P \leq 1.85$.

By adjusting the compaction density of the negative electrode film layer 5212 to fall within the appropriate range, the secondary battery may have a high energy density. In addition, by adjusting the compaction density to fall within the appropriate range, the negative electrode film layer 5212 may further have great ability to maintain the pore structure during the cycle process; accordingly, the electrolytic solution may better infiltrate the negative electrode plate 521, and thus the cycle performance of the secondary battery can be further improved. Optionally, $1.30 \leq P \leq 1.80$. For example, P, in g/cm$^3$, may be 1.1 g/cm$^3$, 1.2 g/cm$^3$, 1.3 g/cm$^3$, 1.4 g/cm$^3$, 1.5 g/cm$^3$, 1.6 g/cm$^3$, 1.7 g/cm$^3$, or 1.8 g/cm$^3$, or in the range formed by any two of the values as mentioned above.

In the present application, the compaction density of the material has a meaning as commonly understood in the art and can be tested using equipment or methods well-known in the art. For example, it can be tested according to the standard GB/T24533-2009 on an electronic pressure testing machine (such as UTM7305 type). The exemplary test method may be as follows: 1g of material is weighted and added into a mold having a base area of 1.327cm$^2$, and is pressurized to 2000 kg (equivalent to 20000N), after holding the pressure for 30s, then the pressure is released, holding for 10s, and then the compaction density of the material under the force of 20000N is recorded and calculated.

In some embodiments, the coating weight of the negative electrode film layer 5212, CW in g/1540.25mm$^2$, satisfies $0.1 \leq CW \leq 0.3$.

By adjusting the coating weight CW of the negative electrode film layer 5212 to fall within the appropriate range, the energy density of the cell and the effect of the ferroelectric layer 5213 on the negative electrode film can be ensured. Optionally, $0.14 \leq CW \leq 0.2$. For example, CW in g/1540.25mm$^2$ may be 0.1 g/1540.25mm$^2$, 0.12 g/1540.25mm$^2$, 0.14 g/1540.25mm$^2$, 0.16 g/1540.25mm$^2$, 0.18 g/1540.25mm$^2$, or 0.2 g/1540.25mm$^2$.

Method for testing coating weight CW is as follows:
The substrate is punched with the area 1540.25mm$^2$ and weighed with a balance; the electrode plate is punched into a small disc (area: 1540.25mm$^2$) and weighed, to minus the weight of the substrate to obtain the active material coating weight.

In some embodiments, the thickness L in $\mu$m of the negative electrode film layer 5212 satisfies $30\mu m \leq L \leq 200\mu m$.

By adjusting the thickness L of the negative electrode film layer 5212 to fall within the appropriate range, on the one hand, the quality of the negative electrode active material can be ensured, so as to ensure the energy density of the secondary battery; on the other hand, in combination with the ferroelectric layer, the ferroelectric layer 5213 can exert full ferroelectric effect and thus facilitate the uniform distribution of metal ions in the negative electrode film layer. Optionally, $35\mu m \leq L \leq 190\mu m$. For example, L may be 30, 35, 40, 45, 50, 60, 70, 80, 90, 100, 120, 140, 150, 160, 180, 190, 200, or in the range formed by any two of the values as mentioned above.

In the present application, the thickness of the negative electrode film layer 5212 has a meaning as commonly understood in the art and can be tested using equipment or methods well-known in the art. For example, the thickness of negative electrode plate 521 may be measured at at least 12 different positions with a micrometer along the thickness direction of negative electrode plate 521 (excluding the ferroelectric layer 5213), and the average is the thickness of the negative electrode plate 521 denoted as h1; it minus the thickness of negative electrode current collector 5211 is thickness of the negative electrode film layer 5212.

The thickness of the negative electrode film layer 5212 can be directly tested by tomography; in particular, it is tested as follows:

1. Sample preparation, in which a. the plate is cut into a size of 6mm*6mm with a ceramic scissors and is adhered to a sample table coated with the paraffin, the sample slightly protrude (< 1mm) from the edge of the sample table, and b. the polishing voltage and time (thickness 150um, negative electrode plate, 7.5KV, 100min) are set; and

2. Morphology analysis, in which the sample is observed with a scanning electron microscope at 50 times magnification, the sample is moved until it can be observed clearly, the thickness of the negative electrode film layer 5212 is marked at twelve locations; afterwards, the average is taken as the thickness of negative electrode film layer 5212.

In some embodiments, the negative electrode film layer 5212 may include a negative electrode active material used in secondary batteries as commonly understood in the art. For example, the negative electrode active material may include one or more selected from natural graphite, artificial graphite, soft carbon, hard carbon, silicon-based material, tin-based material, and lithium titanate. The silicon-based materials may include one or more materials selected from elemental silicon, silicon oxides, silicon-carbon complexes, silicon-nitrogen complexes, and silicon alloys. The tin-based materials may include one or more selected from elemental tin, tin oxide, and tin alloy materials. Further optionally, the negative electrode active material includes the silicon-carbon complex. During the charging of the secondary battery, the silicon in the silicon-carbon complex may expand in volume, and the expanded silicon may render certain compressive stress to the ferroelectric particles, which may stimulate the piezoelectric effect of the ferroelectric particles and improve their ability to uniform the concentration of the metal ions.

In some embodiments, the negative electrode film layer 5212 optionally includes a negative electrode conductive agent. The negative electrode conductive agent is not particularly limited in the present application; for example, it may include one or more of superconducting carbon, conductive graphite, acetylene black, carbon black, Ketjen Black, carbon dot, carbon nanotube, graphene, and carbon nanofiber. In some embodiments, based on the total mass of the negative electrode film layer 5212, the mass percentage of the negative conductive agent is less than 5%.

In some embodiments, the negative electrode film layer 5212 optionally includes a negative electrode binder. The negative electrode binder is not particularly limited in the present application; for example, it may include on or more selected from styrene butadiene rubber (SBR), water-soluble unsaturated resin SR-1B, water-based acrylic resin (such as Polyacrylate PAA, polymethacrylate PMAA, and sodium polyacrylate PAAS), polyacrylamide (PAM), polyvinyl alcohol (PVA), sodium alginate (SA)m and carboxymethyl chitosan (CMCS). In some embodiments, based on the total mass of the negative electrode film layer 5212, the mass percentage of the negative electrode binder is less than 5%.

In some embodiments, the negative electrode film layer 5212 optionally includes other auxiliaries. For example, other auxiliaries may include a thickener, such as carboxymethyl cellulose sodium (CMC-Na), and PTC thermistor materials. In some embodiments, based on the total mass of the negative electrode film layer 5212, the mass percentage of other auxiliaries is less than 2%.

In some embodiments, the negative electrode current collector 5211 may be a metal foil or a composite collector. As an example of the metal foil, a copper foil or a copper alloy foil may be used. The composite current collector may include a base layer of a polymer material and a layer of metal material formed on at least one surface of the base layer of a polymer material. For example, the metal material may include one or more selected from copper, copper alloy, nickel, nickel alloy, titanium, titanium alloy, silver, and silver alloy. The polymer material for the base layer may be one or more selected from polypropylene (PP), polyethylene terephthalate (PET), polybutylene terephthalate (PBT), polystyrene (PS), and polyethylene (PE).

The negative film layer 5212 is usually prepared by applying the negative electrode slurry on the negative electrode current collector 5211 and undergoing drying and cold pressing. The negative electrode slurry is usually formed by dispersing the negative electrode active material, optional conductive agent, optional binder, and other optional additives in the solvent and stirring uniformly. The solvent may be N-methylpyrrolidone (NMP) or deionized water, but is not limited thereto.

The negative electrode plate 521 does not exclude additional functional layers other than the negative electrode film layer 5212. For example, in some embodiments, the negative electrode plate 521 of the present application further includes a conductive bottom coating (e.g. consisting of a conductive agent and a binder) sandwiched between the negative electrode current collector 5211 and the negative film layer 5212 and placed on the surface of the negative electrode current collector 5211. In other embodiments, the negative electrode plate 521 of the present application further includes a protective layer covering the surface of the negative electrode film layer 5212.

It should be noted that the above tests of the parameters directing to the negative electrode plate 521 are illustrated by taking the negative electrode active material as the test sample; the sample for the test may be taken before applying the negative electrode slurry or from the negative electrode film layer 5212 after cold pressing. When the sample for testing the negative electrode plate 521 is taken from a cold-pressed negative electrode film 5212, for example, the sample may be taken as follows: any cold-pressed negative electrode film 5212 may be selected for taking the sample of the negative electrode active material (for example, scraping with a blade); the powders of negative electrode active material as collected above is placed in deionized water, then is pumped, filtered, dried, and then the dried negative electrode active material is sintered at a certain temperature for a certain time (for example, 400°C, 2h) to remove the binder and conductive agent; then the negative electrode active material test sample is obtained. Alternatively, the sample may be taken before the ferroelectric slurry is solidified or after the ferroelectric slurry is solidified.

## Method for preparing negative electrode plate

In the second aspect, the present application provides a method for preparing a negative electrode plate, which may be used to prepare the negative electrode plate of any embodiment of the first aspect of the application.

The method includes

S100, providing a negative electrode current current collector;

S200, providing a negative electrode slurry including a negative electrode active material to the negative electrode current collector and solidifying the negative electrode slurry on at least one surface of the negative electrode current collector to form a negative film; and

S300, providing a ferroelectric slurry including the ferroelectric particles to the negative electrode film layer and solidifying the ferroelectric slurry on the surface of the negative electrode film layer opposite to the negative electrode current collector to form a ferroelectric layer, whereby a negative electrode plate is obtained;

wherein the compaction density of the negative electrode film layer is denoted as P in $g/cm^3$,

the coating weight of the negative electrode film layer is denoted as CW in $g/1540.25mm^2$,

the thickness of the ferroelectric layer is denoted as H in $\mu$m, and

the volume average particle size Dv50 of the ferroelectric particle is dented as D in $\mu$m;

the negative electrode plate satisfies

$$0 < \frac{H*P}{D*CW*2*1000000} < 2 \text{ ; optionally, } 0 < \frac{H*P}{D*CW*2*1000000} < 1 .$$

The method of the embodiments of the present application allows a simple preparation process, requiring only the subsequent formation of a ferroelectric layer on the negative electrode film layer, with no need of changing the original production process route, so the operation is convenient. Moreover, the negative electrode plate has good dynamic performance.

In some embodiments, in step S200, based on the total mass content of the ferroelectric layer, the mass content a of the ferroelectric particle satisfies $90\% \leq a \leq 98\%$; optionally, $95\% \leq a \leq 98\%$.

The ferroelectric slurry may be placed on the negative electrode film layer by a variety of processes, such as a gravure process and a coating process. In the gravure process, the ferroelectric slurry may be placed on the gravure plate and is carried by the roll gap of the gravure roll to roll-applying on the negative electrode film layer. The thickness of the ferroelectric layer may be controlled by adjusting the size of the roll gap.

When the mass of ferroelectric slurry is small, the ferroelectric slurry may cover part of the negative electrode film layer, and the ferroelectric layer as formed after solidifying may be a continuous state or a discontinuous state. As the mass of the ferroelectric slurry increases, the ferroelectric slurry may cover the whole negative electrode film, and the ferroelectric layer as formed after solidifying may be a continuous whole-layer structure, covering as a whole-layer on the negative electrode film layer.

The mass of the ferroelectric particles may be adjusted by adjusting the mass content a of ferroelectric particles. Under the condition that the mass content a of ferroelectric particles falls within the above range, the ferroelectric layer and the negative electrode film layer have high the bonding strength, thus, the ferroelectric layer is not likely to peel off and can advantageously exert ferroelectric effect to make uniform the distribution of the metal ions.

## Secondary battery

In the third aspect, the present application provides a secondary battery, including the negative electrode plate according to the second aspect of the present application.

Secondary battery, also known as rechargeable battery or storage battery, refers to a battery that can be reused by activating the active material via charging after the battery is discharged. The secondary battery includes an electrode assembly and an electrolytic solution.

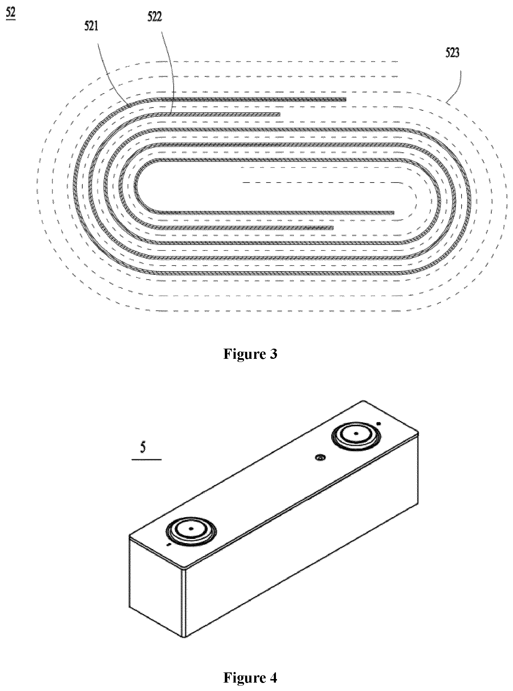

As shown in Figure 3, the electrode assembly 52 typically includes a positive electrode plate 522, a negative electrode plate 521, and a separator 523. The separator 523 is arranged between the positive electrode plate 522 and the negative electrode plate 521, and mainly prevents the short circuit of the positive electrode and the negative electrode and allows metal ions to pass through. The electrolytic solution conducts the metal ions between the positive electrode plate 522 and the negative electrode plates 521. The secondary battery of the present application may be a lithium secondary battery, a sodium-ion battery, etc., in particular, it may be lithium-ion secondary battery.

[Negative electrode plate]

The negative electrode plate as used in the secondary battery of the present application is the negative electrode plate of any embodiment of the second aspect of the present application.

[Positive electrode plate]

In some embodiments, the positive electrode plate includes a positive current collector and a positive electrode film layer arranged on at least one surface of the positive current collector. For example, the positive electrode current collector has two surfaces opposite in the thickness direction thereof, and the positive electrode film layer is arranged on any one of or two of the opposite surfaces of the positive electrode current collector.

The positive electrode film layer includes a positive electrode active material. The positive electrode active material may be the positive electrode active material used in in secondary batteries as commonly known in the art. For example, the positive electrode active material may include one or more selected from lithium transition metal oxide, olivine-structured lithium-containing phosphate, and the modified compounds thereof. Examples of the lithium transition metal oxide may include one or more selected from lithium cobalt oxides, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and the modified compounds thereof. Examples of the olivine-structured lithium-containing phosphate may include one or more selected from lithium iron phosphate, a composite of lithium iron phosphate and carbon, lithium manganese phosphate, a composite of lithium manganese phosphate and carbon, lithium iron manganese phosphate, a composite of lithium iron manganese phosphate and carbon, and the modified compounds thereof.

In some embodiments, in order to further increase the energy density of the secondary battery, the positive electrode active material may include one or more of the lithium transition metal oxides or the modified compounds thereof as shown in Formula 1.

$$Li_aNi_bCo_cM_dO_eA_f \qquad \text{Formula 1}$$

In formula 1, $0.8 \leq a \leq 1.2$, $0.5 \leq b < 1$, $0 < c < 1$, $0 < d < 1$, $1 \leq e \leq 2$, $0 \leq f \leq 1$, M includes one or more selected from Mn, Al, Zr, Zn, Cu, Cr, Mg, Fe, V, Ti, and B. A includes one or more selected from N, F, S and Cl.

In the present application, the modified compounds of each positive electrode active material may be doping-modified or surface coating modified positive electrode active material.

In some embodiments, the positive electrode film layer may optionally include a positive electrode binder. There are no special restrictions on the types of positive electrode binders in the present application. As an example, the positive electrode binder may include one or more combinations selected from polyvinylidene fluoride (PVDF), polytetrafluoroethylene (PTFE), vinylidene fluoride tetrafluoroethylene propylene terpolymer, vinylidene fluoride hexafluoropropylene tetrafluoroethylene terpolymer, tetrafluoroethylene hexafluoropropylene copolymer, fluoroacrylate resin, and the combination thereof. In some embodiments, based on the total mass of the positive electrode film layer, the mass percentage of the positive electrode binder is less than 5%.

In some embodiments, the positive electrode film layer may optionally include a positive electrode binder. There are no special restrictions on the types of positive electrode binders in the present application. As an example, the positive electrode binder may include one or more combinations selected from polyvinylidene fluoride (PVDF), polytetrafluoroethylene (PTFE), vinylidene fluoride tetrafluoroethylene propylene terpolymer, vinylidene fluoride hexafluoropropylene tetrafluoroethylene terpolymer, tetrafluoroethylene hexafluoropropylene copolymer, fluoroacrylate resin, and the combination thereof. In some embodiments, based on the total mass of the positive electrode film layer, the mass percentage of the positive electrode binder is less than 5%.

In some embodiments, the positive electrode current collector may be a metal foil or composite current collector. As an example of metal foil, aluminum foil or aluminum alloy foil may be used. The composite current collector may include a polymer material base layer and a metal material layer formed on at least one of the surfaces of the polymer material base layer. As an example, the metal material may include one or more selected from aluminum, aluminum alloy, nickel, nickel alloy, titanium, titanium alloy, silver, silver alloy, and the combination thereof. The polymer material base layer may include one or more selected from polypropylene (PP), polyethylene terephthalate (PET), polybutylene terephthalate (PBT), polystyrene (PS), polyethylene (PE), and the combination thereof.

The positive electrode film layer is usually formed by applying the positive electrode slurry on the positive electrode current collector, drying, and cold pressing. The positive electrode slurry is usually formed by dispersing the positive electrode active material, optional conductive agent, optional binder, and any other components in a solvent and stirring evenly. The solvent may be N-methylpyrrolidone (NMP), but is not limited thereto.

[Electrolytic solution]

In the present application, the electrolytic solution may be the electrolytic solution used in the secondary battery as commonly known in the art. The electrolytic solution includes a lithium salt and an organic solvent.

As an example, a lithium salts may include one or more selected from lithium hexafluorophosphate ($LiPF_6$), lithium tetrafluoroborate ($LiBF_4$), lithium perchlorate ($LiClO_4$), lithium hexafluoroarsenate ($LiAsF_6$), lithium difluorosulfonyl imine (LiFSI), lithium difluorosulfonyl imine (LiTFSI), lithium trifluoromethanesulfonate (LiTFS), lithium difluorooxalate borate (LiDFOB), lithium dioxalate borate (LiBOB), lithium difluorophosphate ($LiPO_2F_2$) One or more combinations of lithium difluorooxalate phosphate (LiDFOP), lithium tetrafluorooxalate phosphate (LiTFOP), and the combination thereof.

As an example, an organic solvents may include one or more selected from ethylene carbonate (EC), propylene carbonate (PC), methyl ethyl carbonate (EMC), diethyl carbonate (DEC), dimethyl carbonate (DMC), dipropyl carbonate (DPC), methyl propyl carbonate (MPC), ethylene propyl carbonate (EPC), butyl carbonate (BC), methyl formate (MF), methyl acetate (MA), ethyl acetate (EA), propyl acetate (PA), methyl propionate (MP) One or more combinations of ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), diethyl sulfone (ESE) , and the combination thereof.

[Separator]

There are no special restrictions on the type of separator in the present application, and any well-known porous-structure separator with good chemical and mechanical stability can be selected.

In some embodiments, the material of the separator may include one or more selected from glass fiber, non-woven fabric, polyethylene, polypropylene, and polyvinylidene fluoride. The separator may be a single layer thin film or a multi-layer composite thin film. When the separator is a multi-layer composite film, the materials of each layer may be the same or different.

In some embodiments, the positive electrode plate, separator, and the negative electrode plate may be made into an electrode assembly through a winding process or a stacking process.

In some embodiments, the secondary battery may include an outer packaging. The outer package may be used to encapsulate the electrode assembly and the electrolytic solution.

In some embodiments, the outer packaging of the secondary battery may be a hard housing, such as a hard plastic housing, an aluminum housing, and a steel housing. The outer packaging of the secondary battery may be a soft pouch, such as a soft pouch in bag form. The material of the soft pouch may include plastic, such as one or more selected from polypropylene (PP), polybutylene terephthalate (PBT), or polybutylene succinate (PBS).

The shape of the secondary batteries is not specifically restricted in the present application, and can be cylindrical, square, or any other shape. Figure 4 is an example of a cuboid shaped secondary battery 5.

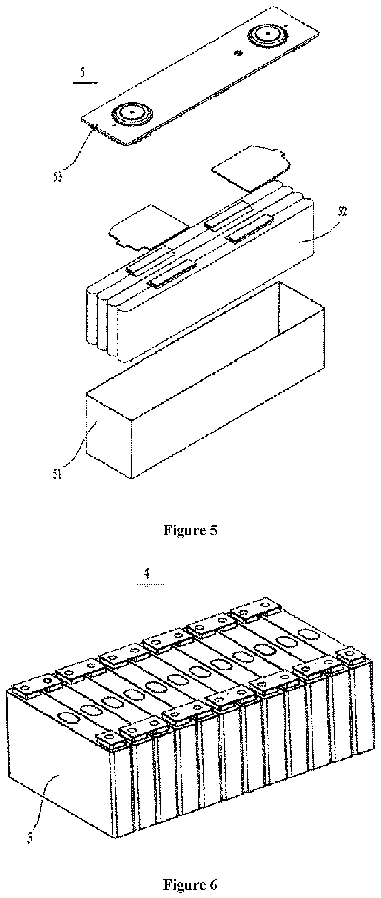

In some embodiments, as shown in Figure 5, the outer packaging may include a housing 51 and a cover plate 53. The housing 51 may include a bottom plate and a side plate connected to the bottom plate, and the bottom plate and side plate enclose to form an accommodation chamber. The housing 51 has an opening connected to the accommodation chamber, and the cover plate 53 covers the opening to close the accommodation chamber. The positive electrode plate, negative electrode plate, and separator may form an electrode assembly 52 through winding or stacking processes. The electrode assembly 52 is encapsulated in the accommodation chamber. The electrolytic solution immerses the electrode assembly 52. The number of electrode components 52 contained in secondary battery 5 may be one or more, and may be adjusted according to needs.

The method for preparing the secondary battery in the present application is well-known. In some embodiments, the positive electrode plate, separator, negative electrode plate, and electrolytic solution may be assembled to form a secondary battery. As an example, the electrode plate, separator, and negative electrode plate can be wound or stacked to form an electrode assembly. The electrode assembly is placed in an outer packaging, dried, and injected with electrolytic solution. After vacuum encapsulation, standing, formation, shaping, and other processes, the secondary battery may be obtained.

In some embodiments of the present application, the secondary battery of the present application may be assembled to form a battery module, and the number of secondary batteries contained in the battery module can be multiple, and the specific number can be adjusted according to the application and capacity of the battery module.

Figure 6 is a schematic diagram of battery module 4 as an example. As shown in Figure 6, in battery module 4, multiple secondary batteries 5 can be arranged in sequence along the length direction of battery module 4. Of course, they may be arranged in any other way. Further, the multiple secondary batteries 5 may be secured with fasteners.

Optionally, the battery module 4 may further include a housing with accommodating space, in which multiple secondary batteries 5 are accommodated.

In some embodiments, the above-mentioned battery modules may further be assembled into battery packs, and the number of battery modules contained in the battery pack can be adjusted based on the application and capacity of the battery pack.

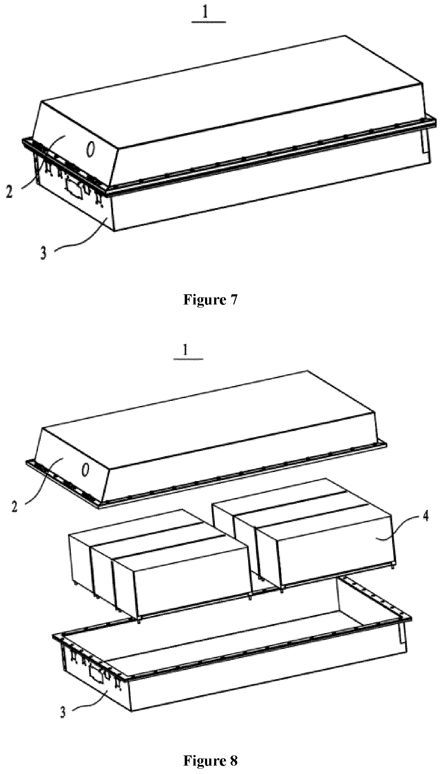

Figures 7 and 8 are schematic diagrams of battery pack 1 as an example. As shown in Figures 7 and 8, the battery pack 1 may include a battery box and multiple battery modules 4 arranged in the battery box. The battery box includes an upper box 2 and a lower box 3. The upper box 2 covers the lower box 3 and forms a closed space for accommodating the battery module 4. Multiple battery modules 4 may be arranged in any way in the battery box.

## Electrical device

In the fourth aspect, the present application provides an electrical device, including at least one of the secondary battery, battery module, and battery pack of the present application. The secondary battery, battery module, and battery pack may be used as the electric source of the electrical device or the energy storage unit of the electrical device. The electric device may be, but are not limited to mobile devices (such as mobile phones, laptops, etc.), electric vehicles (such as pure electric vehicles, hybrid electric vehicles, plug-in hybrid electric vehicles, electric bicycles, electric scooters, electric golf carts, electric trucks, etc.), electric trains, ships and satellites, energy storage systems, etc.

The electric device may be selected as the secondary batteries, battery modules, or battery packs based on the usage thereof.

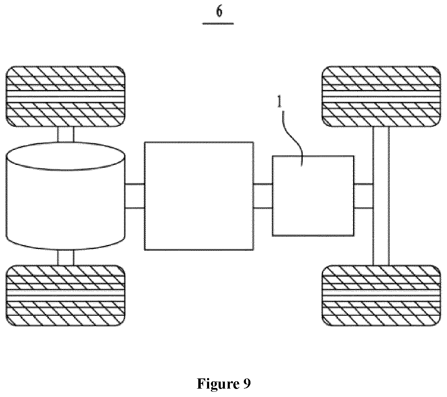

Figure 9 is a schematic diagram of an electrical device as an example. The electrical device 6 is a pure electric vehicle, hybrid electric vehicle, or plug-in hybrid electric vehicle, etc. To meet the requirements for high power and energy density of the electrical device, the battery pack 1 or battery module may be used.

As another example, the electrical device may be mobile phones, tablets, laptops, etc. The electrical device usually requires to be light and thin, and can adopt the secondary battery as the power source.

## Examples

Hereinbelow, the implementations of the present application will be described. The embodiments as described below are exemplary and are only intended to explain the present application, but should not be understood as limitations to the present application. Where the embodiment in which the specific technology or conditions are not specified, the technology or conditions may be employed according to those described in the literature in the art or the product manual. The reagents or instruments used without specifying the manufacturer are conventional products that are commercially available.

## Example 1

1. Preparation of positive electrode plate

An aluminum foil having a thickness of 13 $\mu$m is used as the positive current collector.

The positive electrode active substance $LiNi_{0.8}Co_{0.1}Mn_{0.1}O_2$, conductive carbon black, and polyvinylidene fluoride (PVDF) as the binder, in a weight ratio of 98:1:1, were mixed in an appropriate amount of N-methylpyrrolidone (NMP) as the solvent under stirring, to form a uniform positive electrode slurry; the positive electrode slurry was applied on the surface of the positive electrode current collector, after the process of drying etc., a positive electrode plate was obtained.

2. Preparation of negative electrode plate

2.1 Preparation of negative electrode active materials

The coke as the raw material was pretreated to remove impurities, and then was paralyzed and granulated to obtain the secondary particles having Dv50 of 10$\mu$m. Then, the secondary particles were graphitized at 3000°C for 24h and coated with the asphalt, and high- temperature carbonized at 1000°C for 15h to obtain the artificial graphite.

2.2 Preparation of the negative electrode film layer

A copper foil having a thickness of 8 $\mu$m was used as the negative electrode current collector.

The artificial graphite as the negative electrode active materials, the conductive carbon black, carboxymethyl cellulose sodium (CMC) as the thickener, and styrene butadiene rubber emulsion (SBR) as the binder, in a weight ratio of 96.8:0.8:1.2:1.2, were mixed in an appropriate amount of deionized water under stirring, to form a uniform negative electrode slurry; the negative electrode slurry was applied on the surface of the negative electrode current collector, after processes of drying etc., the film layer was obtained.

2.3 Preparation of the ferroelectric layer

40wt% of barium titanate, styrene butadiene rubber (SR-1B) as the binder, sodium carboxymethyl cellulose as the dispersant, and acrylate emulsion were dissolved in deionized water with stirring under the action of vacuum mixer until the system was uniform, the barium titanate slurry having the solid content of 40% was obtained.

The barium titanate slurry was applied on the surface of the negative electrode film layer that is away from the negative electrode current collector, after drying at 110°C, the barium titanate slurry solidified on the negative electrode film layer into a ferroelectric layer, then after the process of forming the tab and cutting etc., the negative electrode plate was obtained.

3. Preparation of electrolytic solution

In an environment with a water content of less than 10ppm, ethylene carbonate, methyl ethyl carbonate, and diethyl carbonate, as the non-aqueous organic solvents, were mixed in a volume ratio of 1:1:1 to obtain an electrolytic solvent. Subsequently, the lithium salt LiPF6 was dissolved into the mixed solvent to prepare the electrolytic solution with a lithium salt concentration of 1 mol/L.

4. Preparation of separator

The polyethylene film was selected as the separator, and was cut into appropriate sizes depending on the size of the positive electrode plate and the negative electrode plate.

5. Preparation of lithium-ion battery batteries

The positive electrode plate, separator, and negative electrode plate were stacked in sequence, so that the separator separated the positive electrode plate from the negative electrode plate, and then they were wound to obtain the electrode assembly; the electrode assembly was placed in an outer packaging, after drying, the electrolytic solution was injected, after vacuum encapsulation, standing, formation, shaping, and other processes, a lithium-ion battery was obtained.

**Example 2**

Example 2-1 to Example 2-5

The difference from Example 1 was that "the thickness of the ferroelectric layer, H" was adjusted in each of Example 2-1 to Example 2-5.

**Comparative Examples**

Comparative Example 1

The difference from Example 1 was that the ferroelectric layer was not used, S = 0, in Comparative Example 1.

Comparative Example 2

The difference from Example 1 was that "the thickness of the ferroelectric layer, H" was adjusted in Comparative Example 2.

Comparative Example 3

The difference from Example 1 was that the negative electrode active material was mixed with ferroelectric particles in the negative electrode slurry of Comparative Example 3. In particular, the negative electrode active material, ferroelectric particles $BaTiO_3$, styrene-butadiene rubber (SBR) as the binder, sodium carboxymethyl cellulose (CMC-Na) as the thickener, and conductive carbon black were fully mixed in the mass ratio of 97:1:1:1 in appropriate amount of solvent deionized water to form a uniform negative electrode slurry; the negative electrode slurry was uniformly applied on the surface of the copper foil as the negative electrode current collector, after drying and cold pressing, the negative electrode plate was obtained.

The parameters of Example 1, Example 2, Comparative Example 1, and Comparative Example 3 are shown in Table 1.

Table 1

| Items | Ferroelectric Layer | | | | Negative Electrode Film Layer | | S | Z |
|---|---|---|---|---|---|---|---|---|
| | Thickness H in $\mu$m | Material of Ferroelectric Particles | Particle Size of the Ferroelectric Particles D in $\mu$m | Mass Content of the Ferroelectric Particles a% | Compaction density P in g/cm$^3$ | Coating Weight CW in g/1540.25mm$^2$ | | |
| Example 1 | 5 | Barium titanate | 0.10 | 95% | 1.75 | 0.14 | 0.50 | 19.253 |
| Example 2-1 | 2 | Barium titanate | 0.10 | 95% | 1.75 | 0.14 | 0.20 | 19.253 |
| Example 2-2 | 4 | Barium titanate | 0.10 | 95% | 1.75 | 0.14 | 0.40 | 19.253 |
| Example 2-3 | 6 | Barium titanate | 0.10 | 95% | 1.75 | 0.14 | 0.60 | 19.253 |
| Example 2-4 | 8 | Barium titanate | 0.10 | 95% | 1.75 | 0.14 | 0.80 | 19.253 |
| Example 2-5 | 10 | Barium titanate | 0.10 | 95% | 1.75 | 0.14 | 1.00 | 19.253 |
| Comparative Example 1 | 0 | Barium titanate | / | 95% | 1.75 | 0.14 | 0.00 | 19.253 |
| Comparative Example 2 | 20 | Barium titanate | 0.08 | 95% | 1.75 | 0.14 | 3.00 | 19.253 |
| Comparative Example 3 | / | Barium titanate | 0.08 | 95% | 1.75 | 0.14 | / | 19.253 |

Herein,

$$S = \frac{H*P}{D*CW*2*1000000} \; ; \; Z = \frac{P}{CW*1000} \; .$$

**Example 3**

Example 3-1 to Example 3-4

The difference from Example 1 was that the particle sizes of the ferroelectric particles D were adjusted in Examples 3-1 to Examples 3-4.

The parameters of Example 1 and Example 3-1 to Example 3-4 are shown in Table 2.

Table 2

| Items | Ferroelectric Layer | | | | Negative Electrode Film Layer | | S | Z |
|---|---|---|---|---|---|---|---|---|
| | Thickness H in $\mu$m | Material of Ferroelectric Particles | Particle Size of the Ferroelectric Particles D in $\mu$m | Mass Content of the Ferroelectric Particles a% | Compaction density P in g/cm$^3$ | Coating Weight CW in g/1540.25mm$^2$ | | |
| Example 1 | 5 | Barium titanate | 0.08 | 95% | 1.75 | 0.14 | 0.60 | 19.253 |
| Example 3-1 | 5 | Barium titanate | 0.10 | 95% | 1.75 | 0.14 | 0.50 | 19.253 |
| Example 3-2 | 5 | Barium titanate | 0.50 | 95% | 1.75 | 0.14 | 0.10 | 19.253 |
| Example 3-3 | 5 | Barium titanate | 0.80 | 95% | 1.75 | 0.14 | 0.06 | 19.253 |
| Example 3-4 | 5 | Barium titanate | 1.00 | 95% | 1.75 | 0.14 | 0.05 | 19.253 |

**Example 4**

Example 4-1 to Example 4-4

The differences from Example 1 is that the mass contents of the ferroelectric particles a% were adjusted in Example 4-1 to Example 4-4.

The parameters of Example 1 and Example 4-1 to Example 4-4 are shown in Table 3.

Table 3

| Items | Ferroelectric Layer | | | | Negative Electrode Film Layer | | S | Z |
|---|---|---|---|---|---|---|---|---|
| | Thickness H in $\mu$m | Material of Ferroelectric Particles | Particle Size of the Ferroelectric Particles D in $\mu$m | Mass Content of the Ferroelectric Particles a% | Compaction density P in g/cm$^3$ | Coating Weight CW in g/1540.25mm$^2$ | | |
| Example 1 | 5 | Barium titanate | 0.10 | 95% | 1.75 | 0.14 | 0.481 | 19.253 |
| Example 4-1 | 5 | Barium titanate | 0.10 | 96% | 1.75 | 0.14 | 0.481 | 19.253 |
| Example 4-2 | 5 | Barium titanate | 0.10 | 97% | 1.75 | 0.14 | 0.481 | 19.253 |
| Example 4-3 | 5 | Barium titanate | 0.10 | 98% | 1.75 | 0.14 | 0.481 | 19.253 |
| Example 4-4 | 5 | Barium titanate | 0.10 | 99% | 1.75 | 0.14 | 0.481 | 19.253 |

**Example 5**

Example 5-1 to Example 5-5

The differences from Example 1 is that the compaction density P and the coating weight of the negative electrode film layer were adjusted in Example 5-1 to Example 5-5.
The parameters of Example 1 and Example 5-1 to Example 5-5 are shown in Table 4.

Table 4

| Items | Ferroelectric Layer | | | | Negative Electrode Film Layer | | | |
|---|---|---|---|---|---|---|---|---|
| | Thickness H in μm | Material of Ferroelectric Particles | Particle Size of the Ferroelectric Particles D in μm | Mass Content of the Ferroelectric Particles a% | Compaction density P in g/cm$^3$ | Coating Weight CW in g/1540.25mm$^2$ | S | Z |
| Example 1 | 5 | Barium titanate | 0.10 | 95% | 1.75 | 0.14 | 0.481 | 19.253 |
| Example 5-1 | 5 | Barium titanate | 0.10 | 95% | 1.10 | 0.25 | 0.169 | 6.777 |
| Example 5-2 | 5 | Barium titanate | 0.10 | 95% | 1.30 | 0.18 | 0.278 | 11.124 |
| Example 5-3 | 5 | Barium titanate | 0.10 | 95% | 1.50 | 0.15 | 0.385 | 15.403 |
| Example 5-4 | 5 | Barium titanate | 0.10 | 95% | 1.70 | 0.12 | 0.546 | 21.820 |
| Example 5-5 | 5 | Barium titanate | 0.10 | 95% | 1.85 | 0.1 | 0.712 | 28.495 |

**Example 6**

Example 6-1 to Example 6-2

The differences from Example 1 is that the types of the ferroelectric particles were adjusted in Example 6-1 to Example 6-2.

Comparative Example 4

The differences from Example 1 is that the ferroelectric particles were replaced with aluminium oxide particles in Comparative Example 4.

The parameters of Example 1, Example 6-1 to Example 6-2, and Comparative Example 4 are shown in Table 5.

Table 5

| Item | Ferroelectric Layer | | | | S | Z |
|---|---|---|---|---|---|---|
| | Thickness H in $\mu$m | Material of Ferroelectric Particles | Particle Size of the Ferroelectric Particles D in $\mu$m | Mass Content of the Ferroelectric Particles a% | | |
| Example 1 | 5 | Barium titanate | 0.10 | 95% | 0.481 | 19.253 |
| Example 6-1 | 5 | Lead titanate | 0.10 | 95% | 0.481 | 19.253 |
| Example 6-2 | 5 | $Na_{0.5}WO_3$ | 0.10 | 95% | 0.481 | 19.253 |
| Comparative Example 4 | 5 | Aluminium oxide | 0.10 | 95% | 0.481 | 19.253 |

**Tests**

1. Tests for negative electrode plate

1.1 Coating weight of the negative electrode film layer, CW

The substrate of 1540.25 mm$^2$ was taken and weighed with a balance, dented as W1; the plate after cold pressing was punched in an area of 1540.25 mm$^2$, and was weighed with a balance, the coating weight of the negative electrode film CW=W2-W1.

1.2 Thickness of the negative electrode film layer, L

The thickness of the negative electrode plates was measured at at least 12 different positions along the thickness direction of the negative electrode plate (excluding the ferroelectric layer) with a micrometer; the average is taken as the thickness of the negative electrode plate, h1; it minuses the thickness of the negative electrode current collector is the thickness of the negative electrode film layer.

1.3 Compaction density of the negative electrode film layer, P

The compaction density of the negative electrode film layer was obtained from the coating weight of the film layer CW and the thickness of the negative electrode film layer L; the formula is as follows: P=CW/L/1540.25.

1.4 Thickness of ferroelectric layer, H

The thickness of the negative electrode plates was measured at at least 12 different positions along the thickness direction of the negative electrode plate (excluding the ferroelectric layer) with a micrometer; the average is the thickness of the negative electrode plate, h1; then, the thickness of negative electrode plate is measured at at least 12 different positions with a micrometer along the thickness direction of negative electrode plate (including the ferroelectric layer), and the average is the thickness of negative electrode plate denoted, h2; the thickness of ferroelectric layer H = h2 - h1.

1.5 Test for the particle size of ferroelectric particles

Dv90, Dv50, and Dv10 of the material have meanings as commonly understood in the art and can be tested using equipment or methods well-known in the art. For example, they could be conveniently tested according to GB/T 19077-2016 Particle size analysis -Laser diffraction methods using a laser particle size analyzer, such as Mastersizer 2000E Laser Particle Size Analyzer from Malvern Instruments Co., LTD, England. Dv90 corresponds to the particle size when the cumulative volume distribution percentage of the material reaches 90%, Dv50 corresponds to the particle size when the cumulative volume distribution percentage of the material reaches 50%; and Dv10 corresponds to the particle size when the cumulative volume distribution percentage of the material reaches 10%.

2. Test for the secondary battery

2.1 Test for the fast-charging performance of the secondary battery

At 25°C, the lithium-ion battery as prepared in each of the Examples and Comparative Examples was fully charged with nC (e.g. n=0.1, 0.2, 0.3, 0.4, 0.5) and fully discharged with 1C, for 10 cycles, and then the lithium-ion battery was fully charged with 1C; then the negative electrode plate was disassembled to observe the lithium precipitation on the surface of the negative electrode plate. If the there was no lithium precipitation, the test proceeded with the fully charging with (n+0.1) C and was conducted again. The test was repeated with the increment in the rate until there was lithium deposition on the surface of the negative electrode, the present rate minus 0.1C was taken as the maximum charging capacity of the lithium-ion batteries.

2.2 Test for energy density

At 25°C, the lithium-ion batteries as prepared in the Examples and Comparative Examples were fully charged at a rate of 0.33C and then fully discharged at a rate of 0.33C, for 3 cycles; the discharge energy at the last cycle was E, the mass of the lithium-ion battery was weighted with an electronic balance to, denote das m, W=E/m.

2.3 Test for storage life

The lithium-ion batteries as prepared in the Examples and Comparative Examples were fully charged to 97% state of charge (SOC) and stored at 60°C until the capacity decayed to 80%, the storage time then was recorded; the target storage time is 280 days. The ratios of the storage time of the Examples and Comparative Examples each to the target storage time were calculated and recorded as the storage life; the target storage life is 100%.

2.4 Cycle Performance test

At 25°C, the lithium-ion batteries as prepared in the Examples and Comparative Examples were charged at 3C rate and discharged at 1C rate to conduct 3% SOC -97%SOC cycle test, until the capacity of the lithium-ion batteries were less than 80% of the initial capacity, the number of cycles was recorded.

**Results**

The effects of the negative electrode plate of the present application on improving the performance of a secondary battery are shown in Tables 6 to 10.

Table 6

| Items | Charging capacity | Cycling life | Energy density | Storage life |
|---|---|---|---|---|
| Example 1 | 5.5C | 2000 | 97.0% | 300 |
| Example 2-1 | 5.1C | 1800 | 99.0% | 290 |
| Example 2-2 | 5.3C | 1900 | 98.0% | 295 |
| Example 2-3 | 5.6C | 2100 | 96.0% | 310 |
| Example 2-4 | 5.7C | 2300 | 95.0% | 315 |
| Example 2-5 | 5.8C | 2350 | 92.0% | 318 |
| Comparative Example 1 | 4.0C | 1600 | 100.0% | 270 |

(continued)

| Items | Charging capacity | Cycling life | Energy density | Storage life |
|---|---|---|---|---|
| Comparative Example 2 | 5.9C | 2400 | 85.5% | 250 |
| Comparative Example 3 | 4.5C | 1700 | 99.5% | 280 |

As can be seen from the results of Examples 2-1 to 2-5 as shown in Table 6, the increase of the thickness of the ferroelectric layer could enhance the inhibition of lithium dendrites and thus improve the charging capability of the secondary battery. Moreover, as the growth of lithium dendrites was inhibited, the cycle performance of the battery cell could be significantly improved and capacity plunge in the cycling could be reduced. As can be seen from the results of the Comparative Example 1, in the secondary battery without a ferroelectric layer, lithium dendrites gradually grew in the cycling on the negative electrode plate, which would deteriorate the cycle performance. As can be seen from the results of the Comparative Example 2, when the ferroelectric layer was too thick, the charging capacity was improved limitedly, but the lithium ions were hindered from passing through, making the energy density greatly deteriorated. As can be seen from the results of the Comparative Example 3, the effect of improving charging capacity achieved by physically mixing the negative electrode active materials and the ferroelectric was not as good as that achieved by coating, because the physically mixed ferroelectric would generate the electric fields having different directions, which would interfere with each other.

Table 7

| Items | Charging capacity | Cycling life | Energy density | Storage life |
|---|---|---|---|---|
| Example 1 | 5.5C | 2000 | 97.0% | 300 |
| Example 3-1 | 5.4C | 1950 | 97.0% | 298 |
| Example 3-2 | 5.2C | 1900 | 97.0% | 295 |
| Example 3-3 | 5.1C | 1850 | 97.0% | 290 |
| Example 3-4 | 4.9C | 1800 | 97.0% | 280 |

As can be seen from the results of Examples 3-1 to 3-4 as shown in Table 7, the smaller the ferroelectric particle size, the more evenly distributed on the coating, the more balanced the growth of lithium dendrites, and the smaller the concentration polarization; in contrast, the smaller the particle size, the more complicated the preparation process and the higher the cost. When the particle size increases, the cost decreases, but there will be interference electric field between the particles having different sizes, which affects the effect of inhibiting lithium deposition.

Table 8

| Items | Charging capacity | Cycling life | Energy density | Storage life |
|---|---|---|---|---|
| Example 1 | 5.5C | 2000 | 97.0% | 300 |
| Example 4-1 | 5.6C | 2010 | 96.5% | 305 |
| Example 4-2 | 5.7C | 2050 | 96.3% | 310 |
| Example 4-3 | 5.7C | 2049 | 96.1% | 308 |
| Example 4-4 | 5.6C | 2000 | 96.0% | 305 |

As can be seen from the results of Examples 4-1 to 4-4 as shown in Table 8, as the ferroelectric content increased, the reverse electric field intensity was enhanced, the vertical growth of the lithium dendrites became slow, with most of the lithium deposition being reversible, the charging capacity was increased, and thus the cycling performance was improved; nevertheless, when the ferroelectric content was too high, the bonding force and dispersing agent content reduced, so the bonding force of ferroelectrics on the negative electrode film reduced, the ferroelectrics is likely to fall off and thus cannot exert the effects thereof.

Table 9

| Items | Charging capacity | Cycling life | Energy density | Storage life |
|---|---|---|---|---|
| Example 1 | 5.5C | 2000 | 97.0% | 300 |
| Example 5-1 | 4.2C | 1700 | 90.0% | 290 |
| Example 5-2 | 4.5C | 1750 | 92.0% | 295 |
| Example 5-3 | 5C | 1850 | 95.0% | 298 |
| Example 5-4 | 5.1C | 1840 | 96.0% | 300 |
| Example 5-5 | 5.2C | 1850 | 98.0% | 310 |

As can be seen from the results of Examples 5-1 to 5-4 as shown in Table 9, under the condition that Z was within the above ranges during the charging of the secondary battery, the ferroelectric layer could affect the overall structure of the plate, including the lower-layer structure of the plate, moreover, the plate has appropriate pore gaps; accordingly, the electrolytic solution was allowed to fully infiltrate the plate, which is conducive to the migration of the lithium ions. Therefore, under the condition that P/CW was in the appropriate range, charging capacity of the battery cell and the energy density could achieve the best.

Table 10

| Items | Charging capacity | Cycling life | Energy density | Storage life |
|---|---|---|---|---|
| Example 1 | 5.5C | 2000 | 97.0% | 300 |
| Example 6-1 | 5.4C | 1999 | 97.0% | 300 |
| Example 6-2 | 5.1C | 1997 | 97.0% | 300 |
| Comparative Example 4 | 4.0C | 1600 | 97% | 270 |

As can be seen from the results of Example 1, Examples 6-1 to 6-2, and Comparative Example 4 as shown in Table 10, the ferroelectric materials could significantly improve battery performance as compared with ordinary oxide materials during the charging of the secondary battery.

Although the present application has been described with reference to preferred embodiments, various improvements can be made and components can be replaced with equivalents without departing from the scope of the present application. Especially, as long as there is no structural conflict, the various technical features mentioned in each embodiment can be combined in any way. The present application is not limited to the specific embodiments disclosed in the text, but includes all technical solutions falling within the scope of the claims.

**Claims**

1.  A negative electrode plate, comprising

    a negative electrode current collector;
    a negative electrode film layer which is arranged on at least one surface of the negative electrode current collector and comprises a negative electrode active material; and
    a ferroelectric layer which is arranged on the surface of the negative electrode film layer opposite to the negative electrode current collector and includes ferroelectric particles,
    wherein
    the negative electrode film layer has a compaction density denoted as P in g/cm$^3$,
    the negative electrode film layer has a coating weight denoted as CW in g/1540.25mm$^2$,
    the ferroelectric layer has a thickness denoted as H in $\mu$m,
    the ferroelectric particles have a volume-average particle size Dv50 denoted as D in $\mu$m, and

    the negative electrode plate satisfies $0 < \dfrac{H*P}{D*CW*2*1000000} < 2$ , and optionally,

$$0 < \frac{H*P}{D*CW*2*1000000} < 1$$ .

2. The negative electrode plate according to claim 1, wherein
the ferroelectric layer has the thickness denoted as H in $\mu$m, which satisfies $2 \leq H \leq 10$, and optionally, $4 \leq H \leq 6$.

3. The negative electrode plate according to claim 1 or 2, wherein
the ferroelectric particles have the volume-average particle size of Dv50 satisfying $0.08 \leq D \leq 1$, and optionally, $0.1 \leq D \leq 0.8$.

4. The negative electrode plate according to any one of claims 1 to 3, wherein
based on the total mass of the ferroelectric layer, the ferroelectric particles have a mass content denoted as a, which satisfies $90\% \leq a \leq 98\%$, and optionally, $95\% \leq a \leq 98\%$.

5. The negative electrode plate according to any one of claims 1 to 4, wherein

the ferroelectric particles comprise one or more selected from perovskite-structured oxides, tungsten-bronze-type compounds, and bismuthoxide-type layered compounds; and
optionally, the perovskite-structured oxides comprise one or more of barium titanate BTO, lead zirconate titanate PZT, lead metaniobate, lead barium lithium niobate PBLN, and lead titanate PT.

6. The negative electrode plate according to any one of claims 1 to 5, wherein
the ferroelectric particles have a dielectric constant satisfying $100 \leq \varepsilon \leq 100000$, and optionally, $1000 \leq \varepsilon \leq 10000$.

7. The negative electrode plate according to any one of claims 1 to 6, wherein
the negative electrode film layer has a compaction density denoted as P in g/cm$^3$ and a coating weight denoted as CW in g/1540.25mm$^2$, satisfying

$$3 < \frac{P}{CW*1000} < 30$$ .

8. The negative electrode plate according to any one of claims 1 to 7, wherein
the negative electrode film layer has the compaction density denoted as P in g/cm$^3$, which satisfies $1.10 \leq P \leq 1.85$, and optionally, $1.30 \leq P \leq 1.80$.

9. The negative electrode plate according to any one of claims 1 to 8, wherein
the negative electrode film layer has the coating weight denoted as CW in g/1540.25mm$^2$, which satisfies $0.10 \leq CW \leq 0.30$, and optionally, $0.14 \leq CW \leq 0.20$.

10. The negative electrode plate according to any one of claims 1 to 9, wherein
the negative electrode film layer has a thickness denoted as L in $\mu$m, which satisfies $30\mu m \leq L \leq 200\mu m$, and optionally, $35\mu m \leq L \leq 190\mu m$.

11. The negative electrode plate according to any one of claims 1 to 10, wherein
the negative electrode active material comprises one or more of natural graphite, artificial graphite, soft carbon, hard carbon, silicon-based material, tin-based material, and lithium titanate.

12. A secondary battery, comprising the negative electrode plate according to any one of claims 1 to 11.

13. A battery module, comprising the secondary battery according to claim 12.

14. A battery pack, comprising the battery module according to in claim 13.

15. An electrical device, comprising the secondary battery according to claim 12, the battery module according to claim 13, or the battery pack according to claim 14.

521

A ─► A

A ─► A

**Figure 1**

A-A

5211

5212

5213

**Figure 2**

**Figure 3**

**Figure 4**

**Figure 5**

**Figure 6**

1

**Figure 7**

1

**Figure 8**

Figure 9

<div align="center">

**INTERNATIONAL SEARCH REPORT**

</div>

| International application No. |
| --- |
| **PCT/CN2022/105664** |

| A. | CLASSIFICATION OF SUBJECT MATTER |
| --- | --- |
| | H01M 4/13(2010.01)i;  H01M 10/052(2010.01)i |

According to International Patent Classification (IPC) or to both national classification and IPC

| B. | FIELDS SEARCHED |
| --- | --- |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 负极, 阳极, 铁电, 钛酸钡, 压实密度, 涂布重量, 粒径, battery, cell, negative, anode, ferroelectric, barium, titanate, pressed, density, CW, particle, size, diameter

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 216213553 U (AESC TECHNOLOGY JIANGSU CO., LTD. et al.) 05 April 2022 (2022-04-05) <br> description, paragraphs 0005-0038 | 1-15 |
| Y | CN 105514350 A (DONGGUAN AMPEREX TECHNOLOGY LTD.) 20 April 2016 (2016-04-20) <br> description, paragraphs 0005-0035 | 1-15 |
| Y | CN 113921889 A (ZHEJIANG FUNLITHIUM NEW ENERGY TECHNOLOGY CO., LTD.) 11 January 2022 (2022-01-11) <br> description, paragraphs 0003-0059 | 1-15 |
| A | CN 112397685 A (ZHUHAI COSMX BATTERY CO., LTD.) 23 February 2021 (2021-02-23) <br> entire document | 1-15 |
| A | JP 2020126733 A (SEKISUI CHEM. IND. CO., LTD.) 20 August 2020 (2020-08-20) <br> entire document | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 December 2022** | **19 December 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/105664**

| Patent document cited in search report | | | Publication date (day/month/year) | Patent family member(s) | | | Publication date (day/month/year) |
|---|---|---|---|---|---|---|---|
| CN | 216213553 | U | 05 April 2022 | None | | | |
| CN | 105514350 | A | 20 April 2016 | KR | 20170057220 | A | 24 May 2017 |
| | | | | JP | 2016072226 | A | 09 May 2016 |
| | | | | US | 2018366776 | A1 | 20 December 2018 |
| | | | | US | 2016093912 | A1 | 31 March 2016 |
| | | | | KR | 20160036482 | A | 04 April 2016 |
| CN | 113921889 | A | 11 January 2022 | None | | | |
| CN | 112397685 | A | 23 February 2021 | WO | 2022100661 | A1 | 19 May 2022 |
| JP | 2020126733 | A | 20 August 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 114217139 A